# EUROPEAN PATENT SPECIFICATION

(11) **EP 2 110 284 B1**
(45) Date of publication and mention of the grant of the patent: **16.03.2016**
(21) Application number: 09005382.8
(22) Date of filing: 15.04.2009
(51) Int. Cl.: B60R 21/0136, B60R 21/01, B60R 21/0132, H04L 12/40, H04L 29/08

(54) **Passenger protection control device and passenger protection system**
Insassenschutzkontrollvorrichtung und Insassenschutzsystem
Dispositif et système de contrôle de protection passager

(30) Priority: 18.04.2008 JP 2008109017
(43) Date of publication of application: 21.10.2009
(73) Proprietor: Keihin Corporation, Shinjuku-ku, Tokyo (JP)
(72) Inventor: Yoshida, Teruo, Tananezawa-machi Shioya-gun Tochigi-ken (JP); Kawaguchi, Taishi, Tananezawa-machi Shioya-gun Tochigi-ken (JP)
(74) Representative: Eisenführ Speiser

(56) References cited:
- EP-A- 0 911 223
- EP-A- 1 349 326
- DE-A1- 19 705 365
- DE-A1-102005 014 783

## Description

### BACKGROUND OF THE INVENTION

### Field of the Invention

The present invention relates to a passenger protection control device and a passenger protection system.

### Description of the Related Art

Document EP 1 349 326 A1, being the closest prior art, discloses a multiplex communication system and car-passenger protection system using the same, wherein a switching control section which forms part of a master control unit is provided for performing an initial setting processing or a detection processing for detecting any problems or malfunctioning satellite units, even if this occurs under normal operation. When the initial setting processing is performed, a power and data communication connection is established between the switching control section and each satellite unit. After transmission of control data to the satellite unit a response signal is expected. If within a predetermined time no response signal is received, then again an initial setting processing is performed using a sequence of the plural satellite units which is opposite to that of the first initial setting processing. If after performance of the second initial setting processing no response signal of at least one of the satellite units is detected after lapse of a predetermined time problems or malfunctioning of the satellite unit concerned is assumed and corresponding information can be output.

Generally, an SRS (Supplemental Restraint System) airbag system is conventional as a system for protecting a passenger during a vehicle collision. The SRS airbag system detects a front collision or a side collision on the basis of collision value data output from satellite sensors such as a front crash sensor (hereinafter, referred to as an FCS) installed in a front part of a vehicle and a side impact sensor (hereinafter, referred to as an SIS) installed in both side parts of the vehicle so as to expand (activate) airbags (passenger protection devices) such as a driver seat airbag, a front passenger seat airbag, and a side airbag.

In such an airbag system, an SRS unit is a control unit which detects the front collision or the side collision on the basis of the collision value data output from the satellite sensors installed at respective parts of the vehicle so as to perform an activation control of the passenger protection device. Generally, the SRS unit is installed separately from an ECU (Electronic Control Unit) which controls an engine or the like. Each satellite sensor is configured as a unit including a sensor body such as an acceleration sensor which detects a collision value during a collision and a control circuit which performs a data communication with the SRS unit. The SRS airbag system generally has a system configuration in which the satellite sensors and the SRS unit are connected to each other via a serial bus based on the SPI (Serial Peripheral Interface) so as to perform a data communication therebetween. Particularly, in the case of a vehicle having a comparatively long overall length and three rows of seats, plural (for example, three) satellite sensors connected to each other through a daisy chain connection are generally arranged in each of both side parts so as to have a predetermined interval therebetween.

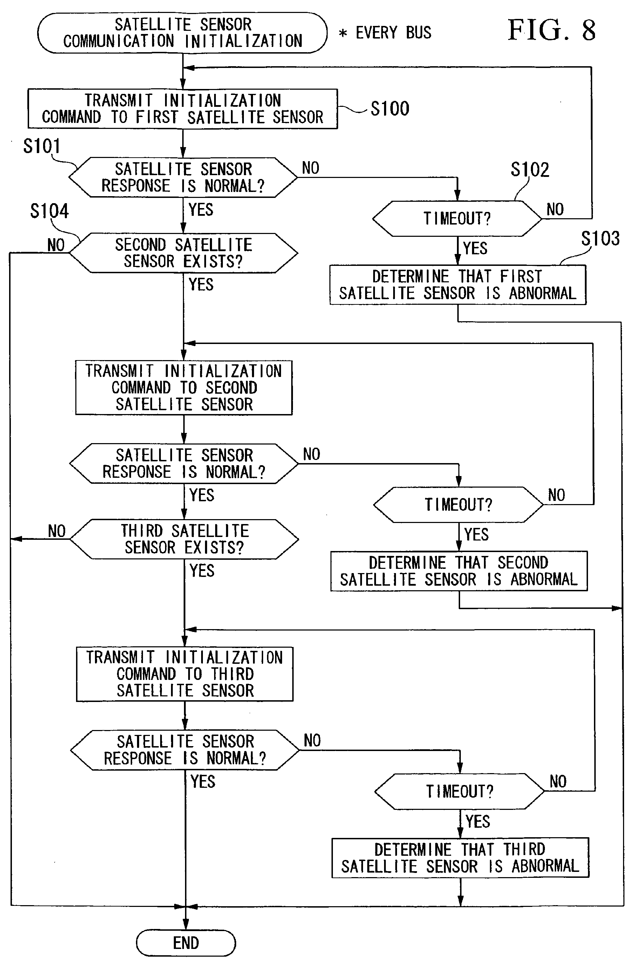

In such an SRS airbag system, the SRS unit performs a communication initialization process (an address allocation or a bus switching setting) on the satellite sensors at the time of activating the engine (at an ignition ON time). FIG. 8 is a flowchart showing an operation of the communication initialization process of the conventional satellite sensors. The communication initialization process is carried out in every bus connected to the satellite sensors. FIG 8 shows an example in which three satellite sensors are connected to each other through a daisy chain connection. That is, the first satellite sensor in the drawing indicates the foremost satellite sensor (the satellite sensor directly connected to the SRS unit) in the daisy chain connection, the second satellite sensor indicates the satellite sensor subsequent to the foremost satellite sensor, and the third satellite sensor indicates the rearmost satellite sensor.

As shown in FIG 8, in Step S100, the SRS unit transmits an initialization command to the first satellite sensor connected to the bus to be subjected to the communication initialization process at the time of activating the engine. In Step S101, the SRS unit determines whether a normal response is returned from the first satellite sensor (that is, whether the communication initialization process is normally carried out). In the case where the normal response is not returned (that is, in the case of "No"), Step S102 is carried out. In Step S102, the SRS unit determines whether a predetermined amount of time elapses (Timeout) by checking an internal timer. In the case where the predetermined amount of time does not elapse (that is, in the case of "No"), the current Step returns to Step S 100 so as to retransmit the initialization command to the first satellite sensor. On the other hand, in the case where the predetermined amount of time elapses (that is, in the case of "Yes"), the SRS unit determines that the first satellite sensor is abnormal and ends the communication initialization process. At this time, the SRS unit turns on an alarm so as to inform the passenger that there is an abnormality in the SRS airbag system.

In Step S101, in the case where the normal response is returned from the first satellite sensor (that is, in the case of "Yes" and the case where the communication initialization process is normally carried out), Step S104 is carried out. In Step S104, the SRS unit determines whether the second satellite sensor exists in the bus which is currently subjected to the communication initialization process. In the case where the second satellite sensor exists (that is, in the case of "Yes"), the communication initialization process is performed on the second satellite sensor in the same manner as that of the first satellite sensor. On the other hand, in the case where the second satellite sensor does not exist (that is, in the case of "No"), the communication initialization process normally ends. In the case where the third satellite sensor exists, the communication initialization process is performed on the third satellite sensor in the same manner as those of the first satellite sensor and the second satellite sensor.

The conventional communication technology between the satellite sensor and the control device (SRS unit) is disclosed in, for example, Japanese Patent Application, First publication No. 2003-152741.

In a conventional SRS airbag system having the above-described configuration, in the case where the initialization command is transmitted to one satellite sensor and the normal response is not returned therefrom, it is determined whether the satellite sensor is abnormal by retransmitting the initialization command to the satellite sensor until the predetermined amount of time elapses. However, in some cases, the satellite sensor may be in an unstable operation state due to, for example, variation in the power and noise caused by an early ignition or a wiring state. For this reason, the communication initialization process may not be carried out until the predetermined amount of time elapses. That is, the normal response corresponding to the initialization command is not returned from the satellite sensor, even though the satellite sensor itself is not in abnormal state. Therefore, it is erroneously determined that the satellite sensor is abnormal.

The present invention is contrived of in consideration of the above-described circumstances, and an object of the invention is to provide a passenger protection control device and a passenger protection system capable of reducing an incidence of abnormal and improving the reliability of determination of an abnormal state of a satellite sensor without erroneously determining the abnormal state.

### SUMMARY OF THE INVENTION

In order to achieve the above-described object, according to an aspect of the invention, there is provided a passenger protection control device which is connected to satellite sensors installed at predetermined positions of a vehicle via buses, and performs an activation control of a passenger protection device on the basis of collision value data transmitted from a satellite sensor, the passenger protection control device is provided with: a sensor power source switching unit which switches ON and OFF a power supplied to the satellite sensor via each bus; and a control unit which transmits an initialization command to each bus so as to perform a communication initialization process on the satellite sensor, wherein in the communication initialization process, in the case where a response data corresponding to the initialization command for any one of the busses is not returned until a predetermined amount of time elapses from transmission of the initialization command, the control unit retransmits the initialization command to each bus after performing a power resupplying operation one or more times by controlling the sensor power source switching unit, and then determines that the satellite sensor connected to a bus that has not returned a response data corresponding to the retransmitted initialization data after the predetermined amount of time elapses is abnormal.

In the passenger protection control device having the above-described configuration, in the case where a plurality of the satellite sensors is connected to a bus by means of a daisy chain connection, the control unit performs the communication initialization process on each satellite sensor which is connected by the daisy chain connection from the foremost satellite sensor in sequence, if the power resupplying operation is performed in any one of communication initialization process on a satellite sensor, the control unit performs the communication initialization process on each satellite sensor which is connected by the daisy chain connection from the foremost satellite sensor in sequence.

According to another aspect of the invention, there is provided a passenger protection system is provided with: satellite sensors which are installed at predetermined positions of a vehicle so as to detect a collision value during a collision; a passenger protection device which protects a passenger riding in a vehicle when the collision occurs; the above-described passenger protection control device; and buses which connect the satellite sensors to the passenger protection control device, wherein the passenger protection control device performs an activation control of the passenger protection device on the basis of collision value data transmitted from a satellite sensor via a bus.

According to the present invention, in the initialization process of the satellite sensor, in the case where the initialization command is transmitted to each bus and the response data corresponding to the initialization command is not returned therefrom until a predetermined amount of time elapses, it is determined that the satellite sensor connected to the bus which does not returns response data is abnormal. Meanwhile, the initialization command is retransmitted after performing the power resupplying operation on the bus which does not returns response data one or more times by controlling the sensor power source switching unit until the predetermined amount of time elapses (that is, the communication initialization process is retried). Likewise, when the power resupplying operation is carried out one or more times, the satellite sensor which is in an unstable operation state due to a variation in the power, noise, or a wiring state can be returned to a stable operation state. Accordingly, the communication initialization process can normally be carried out upon retransmission of the initialization command to the satellite sensor.

As a result, it is possible to reduce an incidence of abnormal and improve the reliability of determination of the abnormal state of the satellite sensor without erroneously determining the abnormal state.

### BRIEF DESCRIPTION OF THE DRAWINGS

FIG. 1 is a schematic view showing a configuration of a passenger protection system provided with a passenger protection control device (SRS unit 30) according to an embodiment of the present invention.
FIG 2 is an explanatory view specifically showing the passenger protection system according to the embodiment.
FIG. 3 is a flowchart showing an operation of the passenger protection system according to the embodiment.
FIG 4 is a first timing chart showing an operation of the passenger protection system according to the embodiment.
FIG. 5 is a second timing chart showing an operation of the passenger protection system according to the embodiment.
FIG. 6 is a third timing chart showing an operation of the passenger protection system according to the embodiment.
FIG. 7 is a fourth timing chart showing an operation of the passenger protection system according to the embodiment.
FIG 8 is a flowchart showing an operation of a conventional passenger protection system.

### DETAILED DESCRIPTION OF THE INVENTION

Hereinafter, an exemplary embodiment of the present invention will be described with reference to the accompanying drawings.

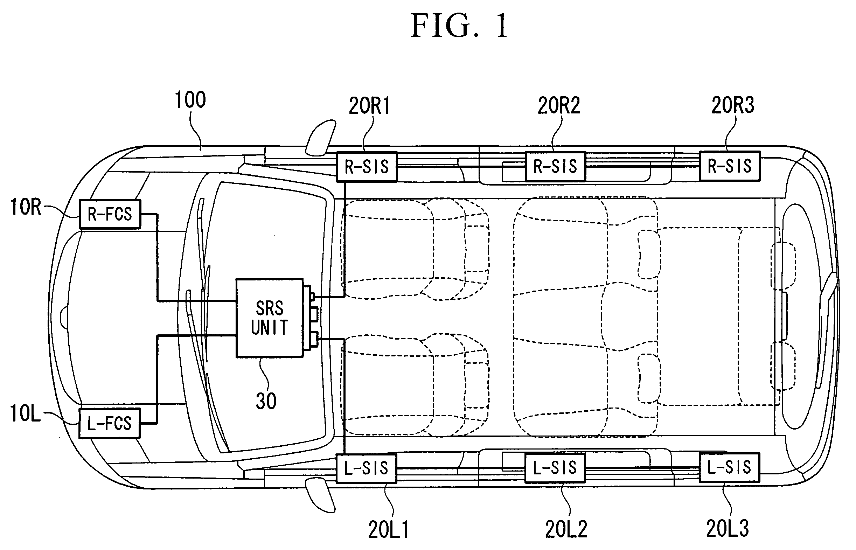

FIG. 1 is a schematic view showing a configuration of a passenger protection system provided with a passenger protection control device according to the embodiment. In addition, an exemplary SRS airbag system will be described hereinafter as the passenger protection system according to this embodiment, and the SRS airbag system is used in a vehicle having a comparatively long overall length and three rows of seats.

As shown in FIG. 1, the passenger protection system according to this embodiment includes: a front crash sensor (hereinafter, referred to as an R-FCS) 10R which is installed on the right side of a front part of a vehicle 100; a front crash sensor (hereinafter, referred to as an L-FCS) 10L which is installed on the left side of the front part of the vehicle 100; three side impact sensors (hereinafter, referred to as R-SIS) 20R1, 20R2, and 20R3 which are installed on the right side part of the vehicle 100 so as to have a predetermined interval therebetween; three side impact sensors (hereinafter, referred to as L-SIS) 20L1, 20L2, and 20L3 which are installed on the left side part of the vehicle 100 so as to have a predetermined interval therebetween; an SRS unit (passenger protection control device) 30 which is installed on the inside of the vehicle 100; a driver seat airbag 50R which is installed on the side of a driver seat and is not shown in the drawing; an assistant seat airbag 50L which is installed on the side of a front passenger seat and is not shown in the drawing; a right side airbag 60R which is installed on the right side part and is not shown in the drawing; and a left side airbag 60L which is installed on the left side part and is not shown in the drawing.

Each of the R-FCS 10R, the L-FCS 10L, the R-SIS 20R1, 20R2, 20R3, and the L-SIS 20L1, 20L2, 20L3 is a satellite sensor which is connected to the SRS unit 30 via a serial bus (hereinafter, simply referred to as a bus) based on the SPI. Each satellite sensor is configured as a unit including a sensor body such as an acceleration sensor which detects a collision value during a collision and a control circuit which performs a data communication with the SRS unit 30.

The R-FCS 10R and the L-FCS10L are configured to detect acceleration generated by a collision value during a front collision by means of the acceleration sensor. An output signal of the acceleration sensor is converted into Acceleration data (collision value data) as digital data by the control circuit, and the acceleration data is transmitted to the SRS unit 30.

The R-SIS 20R1, 20R2, and 20R3 are connected to one bus by means of a daisy chain connection, and are configured to detect acceleration generated by a collision value during a side collision at the right side part by means of the acceleration sensor. An output signal of the acceleration sensor of the foremost R-SIS 20R1 is converted into acceleration data as digital data by the control circuit, and the acceleration data is transmitted to the SRS unit 30. Acceleration data of the second R-SIS 20R2 is transmitted to the SRS unit 30 via the foremost R-SIS 20R1. Acceleration data of the rearmost R-SIS 20R3 is transmitted to the SRS unit 30 via the R-SIS 20R2 and 20R1.

The L-SIS 20L1, 20L2, and 20L3 are connected to one bus by means of a daisy chain connection, and are configured to detect acceleration generated by a collision value during a side collision at the left side part by means of the acceleration sensor. An output signal of the acceleration sensor of the foremost L-SIS 20L1 is converted into acceleration data as digital data by the control circuit, and the acceleration data is transmitted to the SRS unit 30. Acceleration data of the second L-SIS 20L2 is transmitted to the SRS unit 30 via the foremost L-SIS 20L1. Acceleration data of the rearmost L-SIS 20L3 is transmitted to the SRS unit 30 via the L-SIS 20L2 and 20L1.

The SRS unit 30 is configured to receive the acceleration data transmitted from each of the R-FCS 10R, the L-FCS 10L, the R-SIS 20R1, 20R2, 20R3, and the L-SIS 20L1, 20L2, 20L3 via the bus, and to detect the front collision or the side collision on the basis of the acceleration data. In addition, expansion (activation) control of the passenger protection device, that is, the driver seat airbag 50R, the front passenger seat airbag 50L, the right side airbag 60R, and the left side airbag 60L is carried out on the basis of the detection result.

The driver seat airbag 50R, the front passenger seat airbag 50L, the right side airbag 60R, and the left side airbag 60L are expanded under control of the SRS unit 30 so as to protect the passenger from the collision value during the collision at the time when the front collision or the side collision occurs. This airbag system is an example of the passenger protection system, and other passenger protection devices (for example, a knee airbag, a curtain airbag, a seatbelt pretensioner, and the like) may be provided.

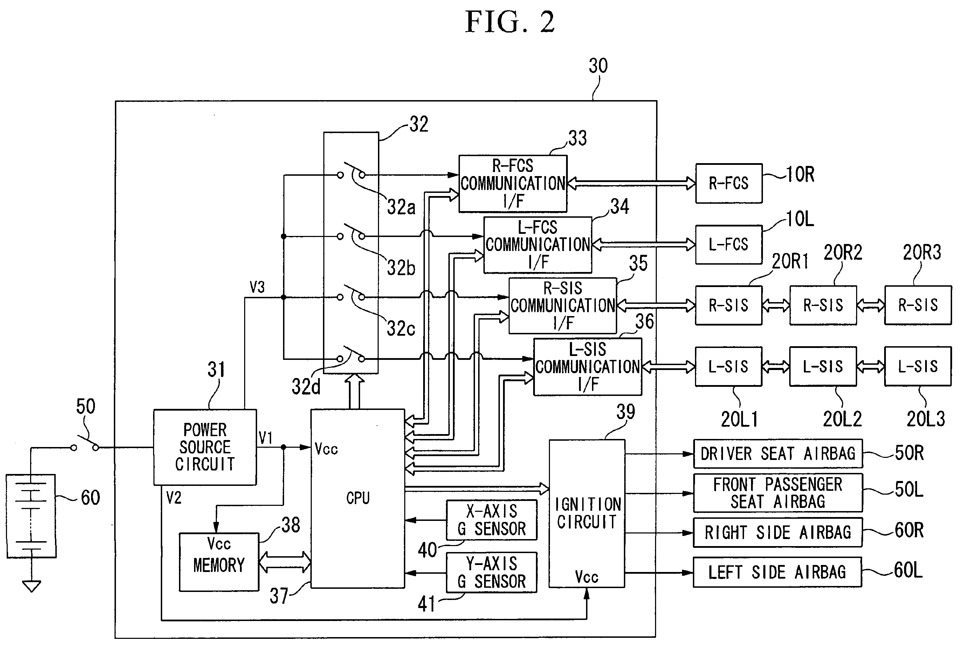

The configuration of the passenger protection system shown in FIG 1 will be described in detail with reference to FIG. 2. As shown in FIG. 2, the SRS unit 30 includes a power source circuit 31; a sensor power source switching circuit (sensor power source switching unit) 32; an R-FCS communication I/F 33; an L-FCS communication I/F 34; an R-SIS communication I/F 35; an L-SIS communication I/F 36; a CPU (Central Processing Unit: control unit) 37; a memory 38; an ignition circuit 39; an X-axis G sensor 40; and a Y-axis G sensor 41.

The power source circuit 31 is connected to an external power source 60 such as a battery via an ignition switch 50. In the case where the ignition switch 50 is switched to ON state, the power source circuit 31 receives a power source voltage (for example, 12 V) from the external power source 60, and converts the power source voltage into an internal power source voltage V1 suitable for the CPU 37 and the memory 38, an internal power source voltage V2 suitable for the ignition circuit 39, and an internal power source voltage V3 suitable for the R-FCS communication I/F 33, the L-FCS communication I/F 34, the R-SIS communication I/F 35, and the L-SIS communication I/F 36. The power source circuit 31 supplies the internal power source voltage V1 to the CPU 37 and the memory 38, supplies the internal power source voltage V2 to the ignition circuit 39, and then supplies the internal power source voltage V3 to the R-FCS communication I/F 33, the L-FCS communication I/F 34, the R-SIS communication I/F 35, and the L-SIS communication I/F 36 via the sensor power source switching circuit 32. Generally, the internal power source voltage V2 is set to be higher than the internal power source voltage V1 since the ignition circuit 39 generates a current for expanding various airbags. In addition, the internal power source voltage V3, which is used as a power source for the bus of the satellite sensors, is set to be higher than the internal power source voltage V1.

The sensor power source switching circuit 32 includes a first switch 32a, a second switch 32b, a third switch 32c, and a fourth switch 32d. The respective switches are configured to switch ON and OFF the internal power source voltage V3 under control of the CPU 37. Specifically, the first switch 32a is configured to switch ON and OFF the internal power source voltage V3 supplied to the R-FCS communication I/F 33. The second switch 32b is configured to switch ON and OFF the internal power source voltage V3 supplied to the L-FCS communication I/F 34. The third switch 32c is configured to switch ON and OFF the internal power source voltage V3 supplied to the R-SIS communication I/F 35. The fourth switch 32d is configured to switch ON and OFF the internal power source voltage V3 supplied to the L-SIS communication I/F 36.

The R-FCS communication I/F 33 is connected to the R-FCS 10R via the bus, and transmits transmission data (for example, an initialization command) obtained from the CPU 37 to the R-FCS 10R so as to output the acceleration data received by the R-FCS 10R to the CPU 37. The R-FCS communication I/F 33 is operated by the internal power source voltage V3 supplied via the first switch 32a, and supplies the internal power source voltage V3 to the R-FCS 10R via a power source line included in the bus.

The L-FCS communication I/F 34 is connected to the L-FCS 10L via the bus, and transmits transmission data obtained from the CPU 37 to the L-FCS 10L so as to output the acceleration data received by the L-FCS 10L to the CPU 37. The L-FCS communication I/F 34 is operated by the internal power source voltage V3 supplied via the second switch 32b, and supplies the internal power source voltage V3 to the L-FCS 10L via a power source line included in the bus.

The R-SIS communication I/F 35 is connected to the R-SIS 20R1 via the bus, and transmits transmission data obtained from the CPU 37 to the R-SIS 20R1 so as to output the acceleration data received by the R-SIS 20R1 to the CPU 37. The R-SIS communication I/F 35 is operated by the internal power source voltage V3 supplied via the third switch 32c, and supplies the internal power source voltage V3 to the R-SIS 20R1 via a power source line included in the bus.

Also, each of the bus connecting the foremost R-SIS 20R1 to the second R-SIS 20R2 and the bus connecting the second R-SIS 20R2 to the rearmost R-SIS 20R3 includes a power source line. In the case where the initialization of the precedent R-SIS is normally carried out, the internal power source voltage V3 is sequentially supplied from the precedent R-SIS to the subsequent R-SIS.

The L-SIS communication I/F 36 is connected to the L-SIS 20L1 via the bus, and transmits transmission data obtained from the CPU 37 to the L-SIS 20L1 so as to output the acceleration data received by the L-SIS 20L1 to the CPU 37. The L-SIS communication I/F 36 is operated by the internal power source voltage V3 supplied via the fourth switch 32d, and supplies the internal power source voltage V3 to the L-SIS 20L1 via a power source line included in the bus.

Also, each of the bus connecting the foremost L-SIS 20L1 to the second L-SIS 20L2 and the bus connecting the second L-SIS 20L2 to the rearmost L-SIS 20L3 includes a power source line. In the case where the initialization of the precedent L-SIS is normally carried out, the internal power source voltage V3 is sequentially supplied from the precedent L-SIS to the subsequent L-SIS.

Likewise, in this embodiment, the sensor power source switching circuit 32 switches ON and OFF the power source (the internal power source voltage V3) for the satellite sensor in each bus connected to the satellite sensor. Each of the signals respectively transmitted to the satellite sensors via the R-FCS communication I/F 33, the L-FCS communication I/F 34, the R-SIS communication I/F 35, and the L-SIS communication I/F 36 includes a control signal such as a clock signal or a selection signal in addition to a data such as an initialization command. The description of control signal will be omitted.

The CPU 37 executes a control program stored in the memory 38 so as to control an entire operation of the SRS unit 30. Specifically, the CPU 37 controls ON and OFF the internal power source voltage V3 supplied to each of the R-FCS communication I/F 33, the L-FCS communication I/F 34, the R-SIS communication I/F 35, and the L-SIS communication I/F 36 by means of the sensor power source switching circuit 32. In addition, the CPU 37 controls the ignition circuit 39 so as to expand the driver seat airbag 50R, the front passenger seat airbag 50L, the right side airbag 60R, and the left side airbag 60L in the case where the front collision or the side collision is detected on the basis of the acceleration data input from the R-FCS communication I/F 33, the L-FCS communication I/F 34, the R-SIS communication I/F 35, and the L-SIS communication I/F 36 and the acceleration data input from the X-axis G sensor 40 and the Y-axis G sensor 41. The CPU 37 performs the communication initialization processes on the satellite sensors (the R-FCS 10R, the L-FCS 10L, the R-SIS 20R1, 20R2, 20R3, and the L-SIS 20L1, 20L2, 20L3) in the case where the engine is started (that is, in the case where the ignition switch 50 is in ON state).

The memory 38 is a writable nonvolatile memory such as a flash memory or an EEPROM (Electronically Erasable and Programmable Read Only Memory). The memory 38 stores a control program executed in the CPU 37 or other various data. The ignition circuit 39 is operated by the internal power source voltage V2, which is used for an ignition and is supplied from the power source circuit 31, and performs an ignition by allowing a current to flow to the squib for the driver seat airbag 50R, the front passenger seat airbag 50L, the right side airbag 60R, and the left side airbag 60L so as to expand the various airbags under control of the CPU 37. The X-axis G sensor 40 detects the acceleration in a longitudinal direction (X-axis direction) of a vehicle, and outputs the acceleration data corresponding to the acceleration in an X-axis direction to the CPU 37. The Y-axis G sensor 41 detects the acceleration in a transverse direction (Y-axis direction) of the vehicle, and outputs the acceleration data corresponding to the acceleration in a Y-axis direction to the CPU 37.

The operation of the passenger protection system with the above-described configuration according to this embodiment will be described. In the passenger protection system according to this embodiment, since an operation for detecting the front collision or the side collision and an operation for controlling the expansion of various airbags are the same as those of the conventional passenger protection system, the description thereof will be omitted. Hereinafter, the communication initialization process of the satellite sensors will be described in detail.

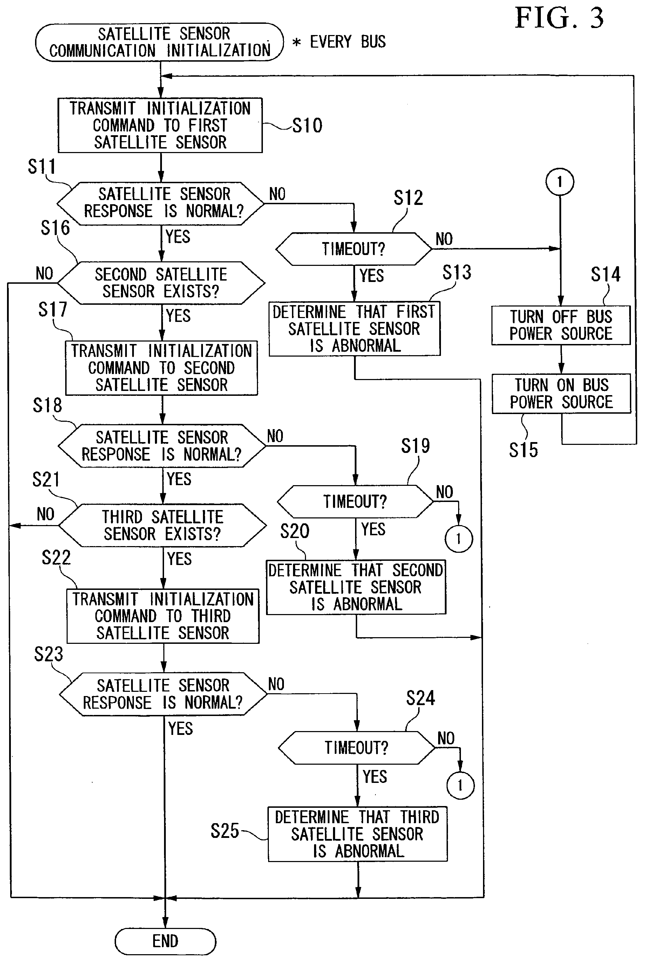

FIG. 3 is a flowchart showing the communication initialization process of the respective satellite sensors. The communication initialization process is carried out in every bus (every communication I/F) connected to the satellite sensors. Hereinafter, the exemplary case where the communication initialization process is performed on each of the satellite sensors (R-SIS 20R1, 20R2, and 20R3) connected to the R-SIS communication I/F 35 will be described.

As shown in FIG. 3, in Step S10, in the case where the engine is started (the ignition switch 50 is in ON state), the CPU 37 of the SRS unit 30 controls the third switch 32c of the sensor power source switching circuit 32 so as to supply the internal power source voltage V3 to the R-SIS communication I/F 35 and transmits the initialization command to the first satellite sensor (herein, the R-SIS 20R1) via the R-SIS communication I/F 35.

In Step S11, the CPU 37 determines whether a normal response is returned from the first satellite sensor, that is, whether a response data corresponding to the initialization command is a response data obtained when the normal initialization is carried out. In Step S11, in the case where the normal response is not returned (that is, in the case of "No"), Step S12 is carried out. In Step S 12, the CPU 37 determines whether elapsed time reaches at a predetermined time (Timeout) by checking an internal timer, that is, whether a predetermined time (for example, 3.5 seconds) elapses. In Step S12, in the case where the predetermined amount of time elapses , that is, in the case where 3.5 seconds elapses from the initialization command transmission time (that is, in the case of "Yes"), Step S13 is carried out. In Step S13, the CPU 37 determines that the first satellite sensor is abnormal, and ends the communication initialization process. At this time, the CPU 37 turns on an alarm so as to inform the passenger that the SRS airbag system is abnormal.

Meanwhile, in Step S12, in the case where the predetermined amount of time does not elapse (that is, in the case of "No"), Step S14 is carried out. In Step S 14, the CPU 37 controls the third switch 32c of the sensor power source switching circuit 32 so as to temporarily stop the internal power source voltage V3 supplied to the R-SIS communication I/F 35. Subsequently, in Step S15, the CPU 37 resupplies the internal power source voltage V3. That is, the power resupplying operation is performed once on the bus which returns abnormal response data (which does not returns response data) through Steps S14 and S 15. After the CPU 37 performs the power resupplying operation as described above, the current Step returns to Step S10. In Step S10, the CPU 37 retransmits the initialization command to the first satellite sensor. That is, in the case where the normal response is not returned, the power resupplying operation is repeated until the predetermined amount of time elapses. Accordingly, the first satellite sensor (R-SIS 20R1) which is in an unstable operation state due to a variation in power, noise, or a wiring state can be returned to a stable operation state. As a result, the communication initialization process can be normally carried out upon retransmission of the initialization command to the first satellite sensor.

In Step S11, in the case where the normal response is returned from the first satellite sensor, that is, in the case where the communication initialization process is normally carried out (that is, in the case of "Yes"), Step S16 is carried out. In Step S16, the CPU 37 determines whether the second satellite sensor exists in the bus which is currently subjected to the communication initialization process. In addition, in the case where the communication initialization process of the first satellite sensor is successfully carried out, the internal power source voltage V3 is supplied from the first satellite sensor to the second satellite sensor.

In Step S16, in the case where the second satellite sensor does not exist (that is, in the case of "No"), the CPU 37 ends the communication initialization process of the satellite sensor (R-SIS 20R1, 20R2, and 20R3) connected to the R-SIS communication I/F 35.

In Step S16, in the case where the second satellite sensor (herein, the R-SIS 20R2) exists (that is, in the case of "Yes"), Step S 17 is carried out. In Step S17, the CPU 37 transmits the initialization command to the second satellite sensor via the first satellite sensor. Subsequently, in Step S18, the CPU 37 determines whether the normal response is returned from the second satellite sensor.

In Step S18, in the case where the normal response is not returned (that is, in the case of "No"), Step S19 is carried out. In Step S19, the CPU 37 determines whether a predetermined amount of time elapses (Timeout) by checking the internal timer. In the case where the predetermined amount of time elapses (that is, in the case of "Yes"), in Step S20, the CPU 37 determines that the second satellite sensor is abnormal, and ends the communication initialization process. At this time, the CPU 37 turns on the alarm so as to inform the passenger that the SRS airbag system is abnormal.

Meanwhile, in Step S 19, in the case where the predetermined amount of time does not elapse (that is, in the case of "No"), Steps S14 and S15 are carried out. In Steps S 14 and S 15, the CPU 37 performs the power resupplying operation to the bus which returns abnormal response data (which does not return response data). Subsequently, the process goes back to Step S10, and the CPU 37 retransmits the initialization command to the first satellite sensor. That is, in the case where the normal response is not returned during the communication initialization process of the second satellite sensor, the communication initialization process of the first satellite sensor is carried out again.

In Step S18, in the case where the normal response is returned from the second satellite sensor (that is, in the case of "Yes"), Step S21 is carried out. In Step S21, the CPU 37 determines whether the third satellite sensor exists in the bus which is currently subjected to the initialization process. In addition, in the case where the initialization process of the second satellite sensor is normally carried out, the internal power source voltage V3 is supplied from the second satellite sensor to the third satellite sensor.

In Step S21, in the case where the third satellite sensor does not exist (that is, in the case of "No"), the CPU 37 ends the communication initialization process of the satellite sensor (R-SIS 20R1, 20R2, and 20R3) connected to the R-SIS communication I/F35.

In Step S21, in the case where the third satellite sensor (herein, the R-SIS 20R3) exists (that is, in the case of "Yes"), Step S22 is carried out. In Step S22, the CPU 37 transmits the initialization command to the third satellite sensor via the first satellite sensor and the second satellite sensor. Subsequently, in Step S23, the CPU 37 determines whether the normal response is returned from the third satellite sensor.

In Step S23, in the case where the normal response is not returned (that is, in the case of "No"), Step S24 is carried out. In Step S24, the CPU 37 determines whether a predetermined amount of time elapses (Timeout) by checking the internal timer. In the case where the predetermined amount of time elapses (that is, in the case of "Yes"), in Step S25, the CPU 37 determines that the third satellite sensor is abnormal, and ends the communication initialization process. At this time, the CPU 37 turns on the alarm so as to inform the passenger that the SRS airbag system is abnormal.

Meanwhile, in Step S24, in the case where the predetermined amount of time does not elapse (that is, in the case of "No"), Steps S14 and S15 are carried out. In Steps S14 and S15, the CPU 37 performs the power resupplying operation to the bus which returns abnormal response data (which does not return response data). Subsequently, the current Step returns to Step S10, and the CPU 37 retransmits the initialization command to the first satellite sensor. That is, in the case where the normal response is not returned during the communication initialization process of the third satellite sensor, the communication initialization process of the first satellite sensor is carried out again.

In Step S23, in the case where the normal response is returned from the third satellite sensor (that is, in the case of "Yes"), the CPU 37 ends the communication initialization process of the satellite sensor (R-SIS 20R1, 20R2, and 20R3) connected to the R-SIS communication I/F 35.

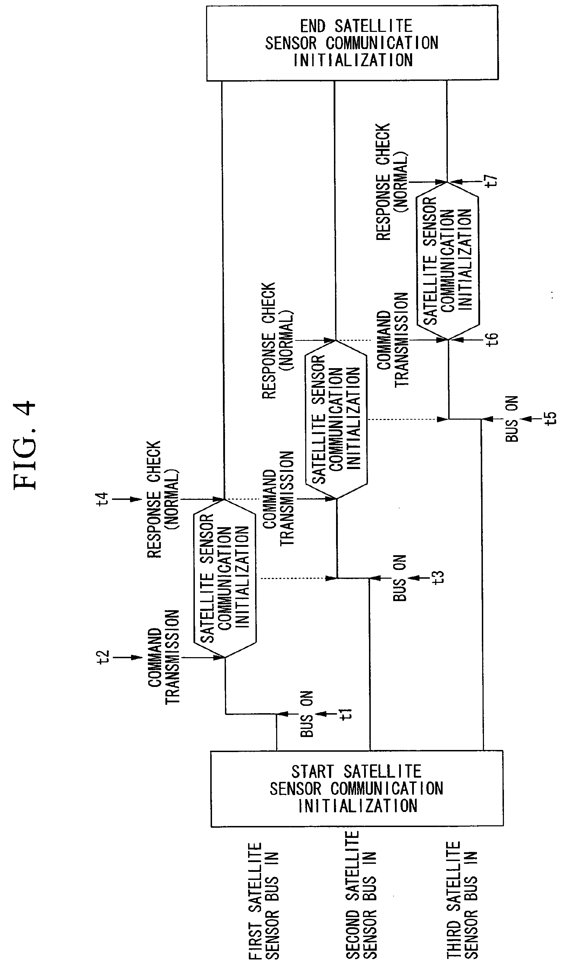

FIGS. 4 to 7 are timing charts showing the communication initialization process.

FIG. 4 is a timing chart showing the case where all sensors, that is, the first to third satellite sensors are normal. As shown in FIG 4, in the case where all satellite sensors are normal, the power is supplied to the first satellite sensor (time t1). The initialization command is transmitted to the first satellite sensor (time t2). The power is supplied to the second satellite sensor (time t3). The response of the first satellite sensor is checked and the initialization command is transmitted to the second satellite sensor (time t4). The power is supplied to the third satellite sensor (time t5). The response of the second satellite sensor is checked and the initialization command is transmitted to the third satellite sensor (time t6). The response of the third satellite sensor is checked (time t7). In this manner, a series of operations are carried out as above, and the communication initialization process normally ends.

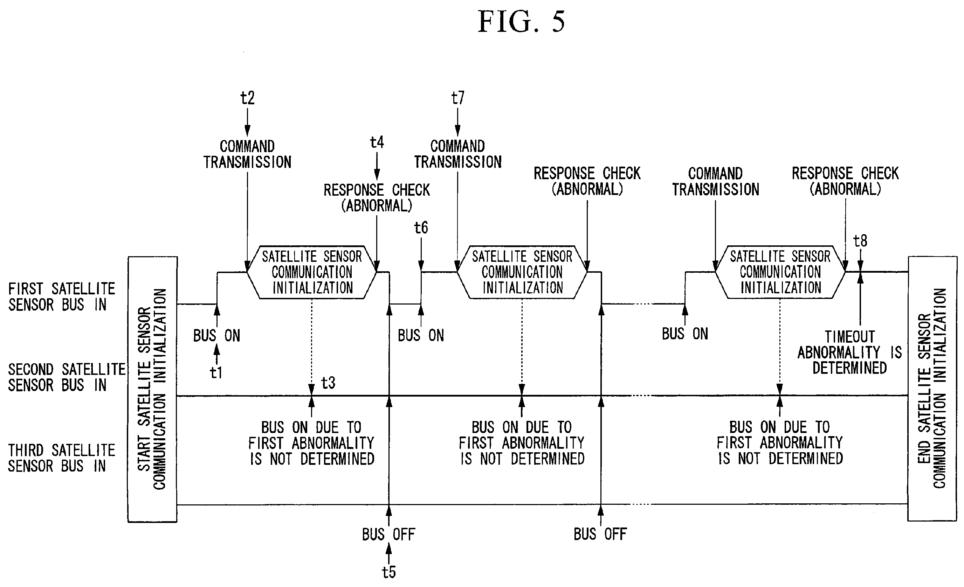

FIG. 5 is a timing chart showing the case where the first satellite sensor is abnormal. In this case, the power is supplied to the first satellite sensor (time t1). The initialization command is transmitted to the first satellite sensor (time t2). The power is not supplied to the second satellite sensor due to the abnormal state of the first satellite sensor (time t3). The abnormal response of the first satellite sensor is checked (time t4). The sensor power source switching circuit 32 is controlled to turn off the power source (time t5) and to turn on the power source (time t6). The initialization command is transmitted to the first satellite sensor (time t7). In this manner, a series of operations are repeated as above. When the predetermined amount of time elapses (time t8), the abnormal state of the first satellite sensor is determined, and the communication initialization process abnormally ends.

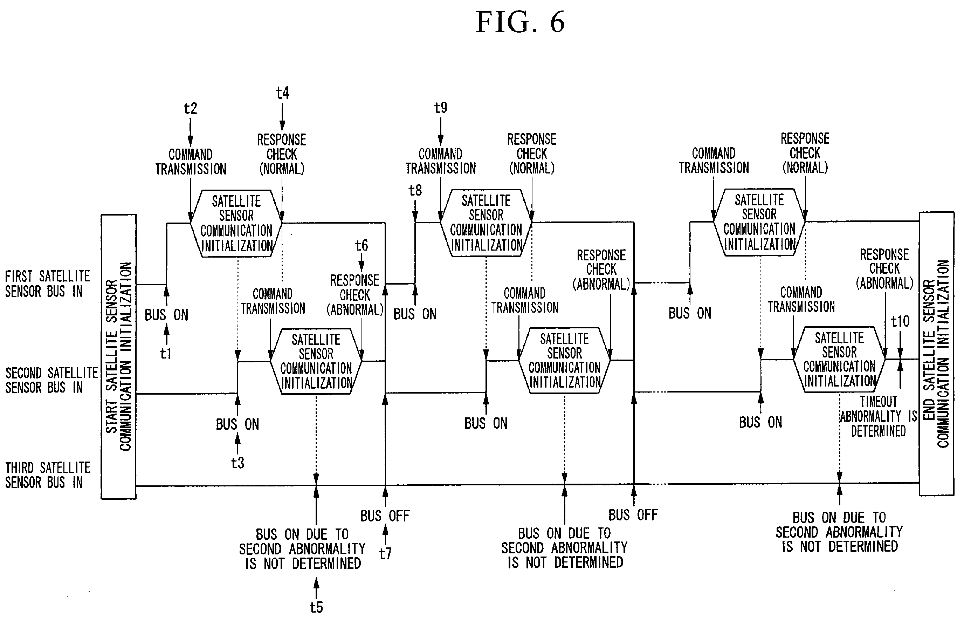

FIG. 6 is a timing chart showing the case where the second satellite sensor is abnormal. In this case, the power is supplied to the first satellite sensor (time t1). The initialization command is transmitted to the first satellite sensor (time t2). The power is supplied to the second satellite sensor (time t3). The response of the first satellite sensor is checked and the initialization command is transmitted to the second satellite sensor (time t4). The power is not supplied to the third satellite sensor due to the abnormal state of the second satellite sensor (time t5). The abnormal response of the second satellite sensor is checked (time t6). The sensor power source switching circuit 32 is controlled so as to turn off the power source (time t7) and to turn on the power source (time t8). The initialization command is transmitted to the first satellite sensor (time t9). In this manner, a series of operations are repeated as above. When the predetermined amount of time elapses (time t10), the abnormal state of the second satellite sensor is determined, and the communication initialization process abnormally ends.

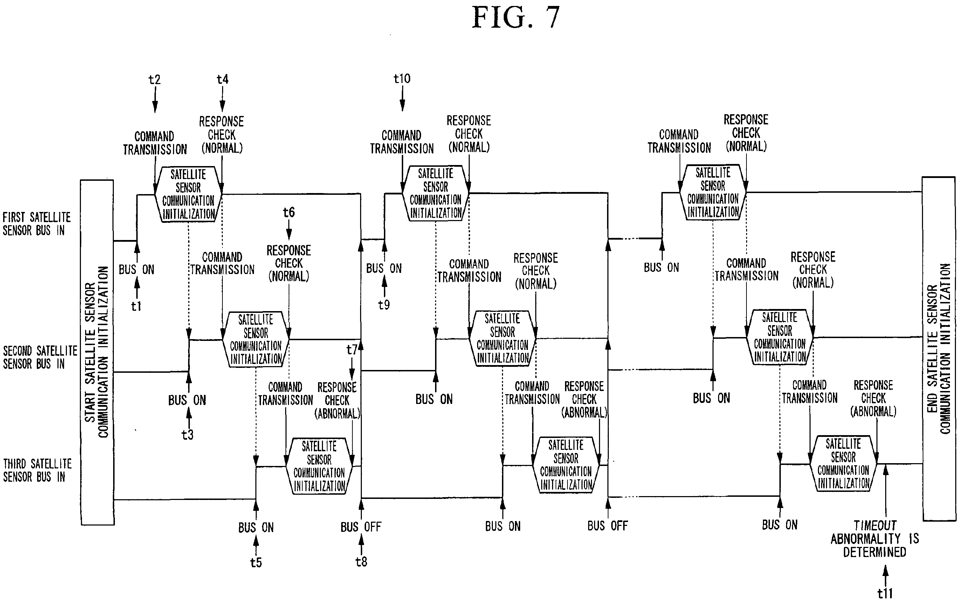

FIG. 7 is a timing chart showing the case where the third satellite sensor is abnormal. In this case, the power is supplied to the first satellite sensor (time t1). The initialization command is transmitted to the first satellite sensor (time t2). The power is supplied to the second satellite sensor (time t3). The response of the first satellite sensor is checked and the initialization command is transmitted to the second satellite sensor (time t4). The power is supplied to the third satellite sensor (time t5). The response of the second satellite sensor is checked and the initialization command is transmitted to the third satellite sensor (time t6). The abnormal response of the third satellite sensor is checked (time t7). The sensor power source switching circuit 32 is controlled so as to turn off the power source (time t8) and to turn on the power source (time t9). The initialization command is transmitted to the first satellite sensor (time t10). In this manner, a series of operations are repeated as above. When the predetermined amount of time elapses (time t11), the abnormal state of the third satellite sensor is determined, and the communication initialization process abnormally ends.

As described above, in the passenger protection system including the SRS unit 30 according to this embodiment, since the power resupplying operation is performed on the bus which returns abnormal response data (which indicates the case where no response data is returned with respect to the initialization command), the satellite sensor which is in an unstable operation state due to a variation in the power, noise, or a wiring state can be returned to a stable operation state. Accordingly, the communication initialization process can be normally carried out upon retransmitting the initialization command to the satellite sensor. As a result, it is possible to reduce an incidence of abnormal and improve the reliability of determination of an abnormal state of the satellite sensor without erroneously determining the abnormal state.

In the above-described embodiment, the power resupplying operation is carried out once (in Steps S 14 and S15), but the initialization command may be retransmitted to the first satellite sensor after the power resupplying operation is carried out a plurality of times. Accordingly, the satellite sensor which is in an unstable operation state can be changed to a stable operation state. In this embodiment, the exemplary case is described in which the communication initialization process is performed on the satellite sensor (R-SIS 20R1, 20R2, and 20R3) connected to the R-SIS communication I/F 35, but the same communication initialization process may be performed on the other satellite sensors.

In the above-described embodiment, the exemplary case is described in which the power source line is included in the bus connecting the satellite sensor to the communication I/F. However, in the case where the power source line is provided separately from the bus including the data line or the control line, the power source line may be directly connected to the sensor power source switching circuit 32 via the communication I/F. In the case where the power is supplied from the external power source circuit of the SRS unit 30 to the separate power source line, the sensor power source switching circuit 32 may be provided on the outside of the SRS unit 30.

While preferred embodiments of the invention have been described and illustrated above, it should be understood that these are exemplary of the invention and are not to be considered as limiting. Accordingly, the invention is not to be considered as being limited by the foregoing description, and is only limited by the scope of the appended claims.

## Claims

1. A passenger protection control device (30) which is connected to satellite sensors (10R, 10L, 20R1, 20R2, 20R3, 20L1, 20L2, and 20L3) installed at predetermined positions of a vehicle (100) via buses, and performs an activation control of a passenger protection device (50R, 50L, 60R and 60L) on the basis of collision value data transmitted from a satellite sensor (10R, 10L, 20R1, 20R2, 20R3, 20L1, 20L2, and 20L3), the passenger protection control device (30) comprising:
a sensor power source switching unit (32) which switches ON and OFF a power supplied to the satellite sensor (10R, 10L, 20R1, 20R2, 20R3, 20L1, 20L2, and 20L3) via each bus; and
a control unit (37) which transmits an initialization command to each bus so as to perform a communication initialization process on the satellite sensor (10R, 10L, 20R1, 20R2, 20R3, 20L1, 20L2, and 20L3), wherein
in the communication initialization process, in the case where a response data corresponding to the initialization command for any one of the busses is not returned, the control unit (37) retransmits the initialization command to each bus after performing a power resupplying operation one or more times by controlling the sensor power source switching unit (32) until a predetermined amount of time elapses from the first transmission of the initialization command, and then the control unit (37) determines that the satellite sensor (10R, 10L, 20R1, 20R2, 20R3, 20L1, 20L2, and 20L3) connected to the bus that has not returned a response data corresponding to the retransmitted initialization command even after the predetermined amount of time elapses is abnormal.

2. The passenger protection control device (30) according to Claim 1, wherein
in the case where a plurality of the satellite sensors (20R1, 20R2, 20R3, 20L1, 20L2, and 20L3) is connected to a bus by means of a daisy chain connection,
the control unit (37) performs the communication initialization process on each satellite sensor (20R1, 20R2, 20R3, 20L1, 20L2, and 20L3) which is connected by the daisy chain connection from the foremost satellite sensor (20R1 and 20L1) in sequence, if the power resupplying operation is performed in any one of communication initialization process on a satellite sensor (20R1, 20R2, 20R3, 20L1, 20L2, and 20L3), the control unit (37) performs the communication initialization process on each satellite sensor (20R1, 20R2, 20R3, 20L1, 20L2, and 20L3) which is connected by the daisy chain connection from the foremost satellite (20R1 and 20L1) sensor in sequence.

3. A passenger protection system comprising:
satellite sensors (10R, 10L, 20R1, 20R2, 20R3, 20L1, 20L2, and 20L3) which are installed at predetermined positions of a vehicle (100) so as to detect a collision value during a collision;
a passenger protection device (50R, 50L, 60R and 60L) which protects a passenger riding in a vehicle (100) when the collision occurs;
the passenger protection control device (30) according to Claim 1 or 2; and
buses which connect the satellite sensors (10R, 10L, 20R1, 20R2, 20R3, 20L1, 20L2, and 20L3) to the passenger protection control device, wherein
the passenger protection control device (30) performs an activation control of the passenger protection device (50R, 50L, 60R and 60L) on the basis of collision value data transmitted from a satellite sensor (10R, 10L, 20R1, 20R2, 20R3, 20L1, 20L2, and 20L3) via a bus.

## Patentansprüche

1. Insassenschutzsteuerungsvorrichtung (30), welche mit Satellitensensoren (10R, 10L, 20R1, 20R2, 20R3, 20L1, 20L2 und 20L3) verbunden ist, welche an vorbestimmten Positionen eines Fahrzeugs (100) über Busse installiert sind, wobei die Vorrichtung eine Aktivierungssteuerung einer Insassenschutzvorrichtung (50R, 50L, 60R und 60L) auf der Basis von Kollisionswertdaten durchführt, welche von einem Satellitensensor (10R, 10L, 20R1, 20R2, 20R3, 20L1, 20L2 und 20L3) übermittelt wurden, wobei die Insassenschutzsteuerungsvorrichtung (30) aufweist:
eine Sensorenergiequellenschaltungseinheit (32), welche zwischen EIN und AUS einer Energie, die dem Satellitensensor (10R, 10L, 20R1, 20R2, 20R3, 20L1, 20L2 und 20L3) über jeden Bus zugeführt wird, schaltet; und
eine Steuerungseinheit (37), welche ein Initialisierungskommando an jeden Bus überträgt, um so einen Kommunikationsinitialisierungsvorgang auf dem Satellitensensor (10R, 10L, 20R1, 20R2, 20R3; 20L1, 20L2 und 20L3) auszuführen, wobei
in dem Kommunikationsinitialisierungsvorgang in dem Fall, wenn ein Antwortdatum, welches mit dem Initialisierungskommando für irgendeinen der Busse korrespondiert, nicht zurückgegeben wird, die Steuerungseinheit (37) das Initialisierungskommando an jeden Bus rückübermittelt, nach einem Durchführen einer erneuten Energiezuführungsoperation einmal oder mehrmals durch Steuern der Sensorenergiequellenschaltungseinheit (32) bis eine vorbestimmte Zeitdauer von der ersten Übertragung des Initialisierungskommandos verstrichen ist, und dann die Steuerungseinheit (37) bestimmt, dass der Satellitensensor (10R, 10L, 20R1, 20R2, 20R3, 20L1, 20L2 und 20L3), der mit dem Bus verbunden ist, der kein Antwortdatum, das mit dem rückübertragenen Initialisierungskommando übereinstimmt, auch nicht nachdem die vorbestimmte Zeitdauer verstrichen ist, zurückgegeben hat, unnormal ist.

2. Insassenschutzsteuerungsvorrichtung (30) nach Anspruch 1, wobei in dem Fall wenn eine Mehrzahl an Satellitensensoren (20R1, 20R2, 20R3, 20L1, 20L2 und 20L3) mit einem Bus durch eine verkettete Busstruktur verbunden ist,
die Steuerungseinheit (37) den Kommunikationsinitialisierungsvorgang auf jedem Satellitensensor (20R1, 20R2, 20R3, 20L1, 20L2 und 20L3) ausführt, welcher durch die verkettete Busstruktur verbunden ist der Reihe nach von dem vordersten Satellitensensor (20R1 und 20L1) ausführt, falls die Energiewiederzuführungsoperation in irgendeinem der Kommunikationsinitialisierungsvorgänge auf einem Satellitensensor (20R1, 20R2, 20R3, 20L1, 20L2 und 20L3) ausgeführt wird, die Steuerungseinheit (37) den Kommunikationsinitialisierungsvorgang auf jedem Satellitensensor (20R1, 20R2, 20R3, 20L1, 20L2 und 20L3) der Reihe nach von dem vordersten Satelliten (20R1 und 20L1) ausführt, welcher durch die verkettete Busstruktur verbunden ist.

3. Insassenschutzsystem aufweisend:
Satellitensensoren (10R, 10L, 20R1, 20R2, 20R3, 20L1, 20L2 und 20L3), welche an einer vorbestimmten Position eines Fahrzeugs (100) zum Detektieren eines Kollisionswerts während einer Kollision installiert sind;
eine Insassenschutzvorrichtung (50R, 50L, 60R und 60L), welche einen Insassen, der in dem Fahrzeug fährt, schützt, wenn die Kollision auftritt;
die Insassenschutzsteuerungsvorrichtung (30) gemäß Anspruch 1 oder 2; und Busse, welche die Satellitensensoren (10R, 10L, 20R1, 20R2, 20R3, 20L1, 20L2 und 20L3) mit der Insassenschutzsteuerungsvorrichtung verbinden, wobei
die Insassenschutzsteuerungsvorrichtung (30) eine Aktivierungssteuerung der Insassenschutzvorrichtung (50R, 50L, 60R, 60L) auf Basis von Kollisionswertdaten, die von einem Satellitensensor (10R, 10L, 20R1, 20R2, 20R3; 20L1, 20L2 und 20L3) über einen Bus übertragen wurden, ausführt.

## Revendications

1. Dispositif (30) de commande de la protection d'un passager, qui est relié à des capteurs (10R, 10L, 20R1, 20R2, 20R3, 20L1, 20L2 et 20L3) à satellite installés en des positions déterminées à l'avance d'un véhicule (100) par l'intermédiaire de bus et qui effectue une commande d'activation d'un dispositif (50R, 50L, 60R et 60L) de protection d'un passager sur la base d'une donnée de valeur de collision émise par un capteur (10R, 10L, 20R1, 20R2, 20R3, 20L1, 20L2 et 20L3) à satellite, le dispositif (30) de commande de la protection d'un passager comprenant
une unité (32) de commutation d'une source de puissance pour un capteur, qui connecte et déconnecte une puissance envoyée aux capteurs (10R, 10L, 20R1, 20R2, 20R3, 20L1, 20L2 et 20L3) à satellite par l'intermédiaire de chaque bus et
une unité (37) de commande, qui envoie une instruction d'initialisation à chaque bus de manière à effectuer une opération d'initialisation de communication sur le capteur (10R, 10L, 20R1, 20R2, 20R3, 20L1, 20L2 et 20L3) à satellite, dans lequel
dans l'opération d'initialisation de communication, dans le cas où une donnée de réponse correspondant à l'instruction d'initialisation pour l'un quelconque des bus n'est pas retournée, l'unité (37) de commande envoie à nouveau l'instruction d'initialisation à chaque bus, après avoir effectué une opération d'envoi à nouveau de la puissance une fois ou plusieurs fois en commandant l'unité (32) de commutation de la source de puissance pour un capteur jusqu'à ce qu'un laps de temps déterminé à l'avance se soit écoulé à partir de la première émission de l'instruction d'initialisation, puis l'unité (37) de commande détermine que le capteur (10R, 10L, 20R1, 20R2, 20R3, 20L1, 20L2 et 20L3) à satellite relié au bus n'a pas retourné une donnée de réponse correspondant à l'instruction d'initialisation émise à nouveau même après que le laps de temps déterminé à l'avance qui s'écoule est anormal.

2. Dispositif (30) de commande de la protection d'un passager suivant la revendication 1, dans lequel
dans le cas où une pluralité des capteurs (20R1, 20R2, 20R3, 20L1, 20L2 et 20L3) à satellite est reliée à un bus au moyen d'une connexion en guirlande,
l'unité (37) de commande effectue une opération d'initialisation de communication sur chaque capteur (20R1, 20R2, 20R3, 20L1, 20L2 et 20L3) à satellite qui est relié par la connexion en guirlande à partir du capteur (20R1 et 20L1) à satellite le plus éloigné en séquence, si l'opération d'envoi à nouveau de puissance est effectuée dans l'une quelconque des opérations d'initialisation de communication sur un capteur (20R1, 20R2, 20R3, 20L1, 20L2 et 20L3) à satellite, l'unité (37) de commande effectue l'opération d'initialisation de communication sur chaque capteur (20R1, 20R2, 20R3, 20L1, 20L2 et 20L3 à satellite qui est relié par la connexion en guirlande à partir du capteur à satellite (20R1 et 20L1) le plus éloigné en séquence.

3. Système de protection d'un passager comprenant
des capteurs (10R, 10L, 20R1, 20R2, 20R3, 20L1, 20L2 et 20L3) à satellite, qui sont installés en des positions déterminées à l'avance d'un véhicule (100), de manière à détecter une valeur de collision pendant une collision,
un dispositif (50R, 50L, 60R et 60L) de protection d'un passager, qui protège un passager transporté dans un véhicule (100) lorsque la collision se produit ;
le dispositif (30) de commande de la protection d'un passager suivant la revendication 1 ou 2 ; et
des bus qui relient les capteurs (10R, 10L, 20R1, 20R2, 20R3, 20L1, 20L2 et 20L3) à satellite au dispositif de commande de la protection d'un passager, dans lequel
le dispositif (30) de commande de la protection d'un passager effectue une commande d'activation du dispositif (50R, 50L, 60R et 60L) de protection d'un passager, sur la base d'une donnée de valeur de collision émise par un capteur (10R, 10L, 20R1, 20R2, 20R3, 20L1, 20L2 et 20L3) à satellite par l'intermédiaire d'un bus.
